# EUROPEAN PATENT APPLICATION

(11) **EP 4 527 660 A1**
(43) Date of publication of application: **26.03.2025**
(21) Application number: 22962832.6
(22) Date of filing: 18.10.2022
(51) Int. Cl.: B60K 35/00, F16H 19/04

(54) **POP-UP DISPLAY DEVICE AND VEHICLE**

(71) Applicant: LG Electronics Inc., Yeongdeungpo-gu Seoul 07336 (KR); Hyundai Motor Company, Seoul 06797 (KR); Kia Corporation, Seocho-gu Seoul 06797 (KR)
(72) Inventor: LEE, Jaekwang, Seoul 06772 (KR); PARK, Seungin, Seoul 06772 (KR)
(74) Representative: Vossius & Partner Patentanwälte Rechtsanwälte mbB
(86) International application number: PCT/KR2022/015882
(87) International publication number: WO 2024/085270

(57) **Abstract**

Provided is a display device comprising: a display panel outputting an image on the front thereof; and a drive unit coupled to the back of the display panel and moving the display panel in the vertical direction, wherein the drive unit comprises: a motor providing rotational force; a pinion gear module which rotates by means of receiving the rotational force of the motor and which includes a first pinion gear and a second pinion gear arranged side by side in the vertical direction; and a rack gear located on the back of the display panel, extending in the vertical direction, and maintaining engagement with at least one of the first pinion gear or the second pinion gear.

## Description

### TECHNICAL FIELD

The present disclosure relates to a display device, and more particularly, to a pop-up display device that protrudes when needed.

### BACKGROUND

A vehicle includes various input and output components as a device for user interfaces. Traditionally, input components have mainly consisted of mechanical parts such as buttons, dials, and levers. However, recently, there has been a growing trend in vehicles adopting more intuitive input methods, such as voice input, touch input, and even gesture input.

A cluster, which includes a dashboard providing information on a vehicle speed, revolutions per minute (RPM), and fuel level, has been used as the most basic output component. However, as display technology improves and vehicle functions become more precise and diversified, more vehicles are being equipped with display units to output various types of information.

In the past, a small liquid crystal display (LCD) for sound output was all that was used, but recently, large display units for displaying navigation and vehicle statuses are being applied to the center fascia between driver and passenger seats. Furthermore, the cluster in the dashboard is no longer needle-based but uses a display, thereby providing various information.

In addition, head-up display (HUD), which projects key information onto a front windshield, has become widespread to allow drivers to check speed or navigation guidance while keeping their eyes on the road.

The display not only outputs information but also includes touch sensors to enable touch input simultaneously. Thus, the display is capable of functioning as both an output and input component. As a result, the size of displays used in vehicles is becoming larger.

However, an instrument panel including the dashboard and center fascia, which is located at the front of the vehicle, may obstruct the front view as the size thereof increases. Additionally, with the advancement of autonomous driving technology, the function of the instrument panel to provide information may become unnecessary or reduced during autonomous driving. Therefore, a larger instrument panel is not always better.

### DISCLOSURE

### TECHNICAL PROBLEM

The present disclosure aims to provide a display device that extends upward, and more particularly, a display device for minimizing the height of a rear cover that covers a driver by reducing the length of a rack gear relative to a stroke length.

The present disclosure aims to provide an instrument panel that is positioned in front of a driver and is capable of being retracted or extended. Specifically, the present disclosure aims to provide a display device capable of being extended when needed and reduced in size to ensure an unobstructed front view.

### TECHNICAL SOLUTION

In an aspect of the present disclosure, provided herein is a display device. The display device includes: a display panel configured to display images on a front side; and a driver coupled to a rear side of the display panel and configured to move the display panel in a vertical direction. The driver comprises: a motor configured to provide rotational power; a pinion gear module configured to rotate by receiving the rotational power from the motor and comprising a first pinion gear and a second pinion gear arranged parallel in the vertical direction; and a rack gear located at the rear side of the display panel, extending in the vertical direction, and maintaining engagement with at least one of the first pinion gear or the second pinion gear.

The display panel moves upward to transition from a first state to a second state. In the first state, the rack gear engages with the first pinion gear, and in the second state, the rack gear engages with the second pinion gear.

A length of the rack gear is shorter than a distance the display panel moves to transition from the first state to the second state.

The pinion gear module further comprises a third pinion gear located between the first pinion gear and the second pinion gear and configured to synchronize the first pinion gear and the second pinion gear to rotate in a same direction.

The third pinion gear is positioned more toward a rear side than the first pinion gear and the second pinion gear.

The display device includes a fixed cover coupled to the rear side of the display panel and configured to cover the driver. In the second state, an upper end of the fixed cover is located above an upper end of the rack gear.

The display device includes: a guide rail fixed to the fixed cover and extending in the vertical direction; and a guide block coupled to the rear side of the display panel and configured to move along the guide rail.

The driver comprises: a worm gear coupled to the motor; a helical gear configured to engage with and rotate along with the worm gear, wherein the helical gear is configured to rotate around an axis extending perpendicular to a rotational axis of the motor; and a horizontal shaft configured to engage with and rotate along with the helical gear and extending in a horizontal direction. The pinion gear module is configured receive the rotational power from the motor via the horizontal shaft.

The rack gear and the pinion gear module are provided on each side of the display panel, and the horizontal shaft extends to each side of the display panel and is connected with the pinion gear module at each end.

The first pinion gear is configured to rotate around the horizontal shaft. The display device further comprises a third pinion gear located between the first pinion gear and the second pinion gear and configured to synchronize the first pinion gear and the second pinion gear to rotate in a same direction.

In another aspect of the present disclosure, provided herein is a vehicle. The vehicle includes: a dashboard located at a front interior of the vehicle and having a horizontally elongated opening; a display panel configured to retract and extend through the opening; and a driver coupled to a rear side of the display panel and configured to move the display panel upward and downward. The driver comprises: a motor configured to provide rotational power; a pinion gear module configured to rotate by receiving the rotational power from the motor and comprising a first pinion gear and a second pinion gear arranged parallel in a vertical direction; and a rack gear located at the rear side of the display panel, extending in the vertical direction, and maintaining engagement with at least one of the first pinion gear or the second pinion gear.

The display panel moves upward to transition from a first state to a second state. In the first state, an upper part of the display panel is exposed outside the opening, and in the second state, an area of the display panel exposed outside the opening reaches a maximum.

The pinion gear module further comprises a third pinion gear located between the first pinion gear and the second pinion gear and configured to synchronize the first pinion gear and the second pinion gear to rotate in a same direction. In the first state, the rack gear engages with the first pinion gear, and in the second state, the rack gear engages with the second pinion gear.

A length of the rack gear is shorter than a distance the display panel moves to transition from the first state to the second state.

The vehicle comprises a fixed cover coupled to the rear side of the display panel and configured to cover the driver. In the second state, an upper end of the fixed cover is located above an upper end of the rack gear.

### ADVANTAGEOUS EFFECTS

A display device of the present disclosure reduces the height of a driver at the rear side thereof, thereby minimizing the size of a fixed cover.

In particular, an instrument panel applied to vehicles may adjust the size, thereby facilitating an unobstructed front view and providing a sense of openness.

Effects obtainable from the present disclosure are not limited by the above mentioned effects, and other unmentioned effects can be clearly understood from the above description by those having ordinary skill in the technical field to which the present disclosure pertains.

### BRIEF DESCRIPTION OF THE DRAWINGS

FIG. 1 is a view showing a state in which a display device according to an embodiment of the present disclosure is mounted as an instrument panel of a vehicle.
FIG. 2 is a cross-sectional view of FIG. 1.
FIG. 3 is a rear view showing the first and second states of the display device according to an embodiment of the present disclosure.
FIG. 4 is a view showing a driver of the display device according to an embodiment of the present disclosure.
FIG. 5 is a view showing a motor, a worm gear, and a helical gear of the display device according to an embodiment of the present disclosure.
FIG. 6 is a view showing operations of a pinion gear of the display device according to an embodiment of the present disclosure.
FIG. 7 is a view showing the positions of a pinion gear and a rack gear in first and second states of the display device according to an embodiment of the present disclosure.
FIG. 8 is a view showing the positions of a pinion gear and a rack gear in the first and second states of the display device equipped with a single pinion gear.
FIG. 9 is a side view showing the position of a fixed cover according to the number of pinion gears.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

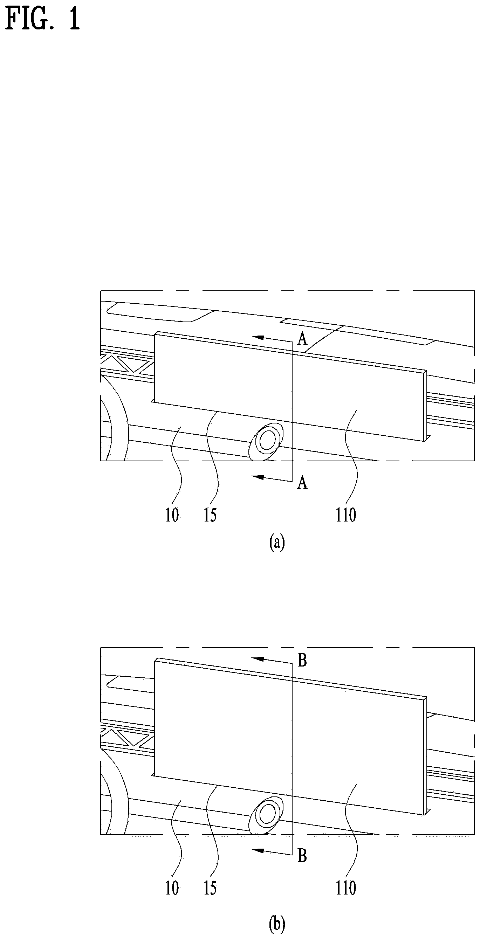

FIG. 1 is a view showing a state in which a display device 100 according to an embodiment of the present disclosure is mounted as an instrument panel of a vehicle.

The display device 100 of the present disclosure may be mounted in a vehicle. The display device 100 may be positioned on a dashboard located at the front interior of the vehicle. However, the present disclosure is not limited thereto, and the display device 100 may also be positioned in the rear seats of the vehicle or on the sides of the vehicle. Furthermore, the display device 100 may be installed not only in vehicles but also on stationary devices.

However, to maximize efficiency in limited spaces such as vehicles, the display device 100 needs to change the size thereof by retracting or extending as needed. Therefore, the following explanation will focus on the display device 100 mounted in the vehicle, particularly as the instrument panel located on the dashboard as shown in FIG. 1.

The vehicle equipped with the display device 100 may be an autonomous driving vehicle. The vehicle may switch between an autonomous driving mode and a manual mode based on a user input. For example, the vehicle may switch from the manual mode to the autonomous driving mode or from the autonomous driving mode to the manual mode based on the user input received through a user interface device.

The vehicle may switch between the autonomous driving mode and manual mode based on driving situation information. The driving situation information may include at least one of external object information, navigation information, or vehicle status information.

When the vehicle operates in the autonomous driving mode, the autonomous vehicle may operate driven based on the operation system. For example, the autonomous vehicle may operate based on information, data, or signals generated by the driving system, departure system, or parking system.

When the vehicle is operated in the manual mode, the autonomous vehicle may receive a user input for driving through a driving control device. Based on the user input received via the driving control device, the vehicle may be operated.

The information provided varies depending on the driving mode of the vehicle, and the size of a display unit may change depending on the provided information. According to the present disclosure, the vehicle may be equipped with the display device 100 capable of varying in size depending on the situation, thereby ensuring a sense of openness at the front while providing a larger screen when needed.

The display device 100 of the present disclosure may include a display panel 110 that retracts and extends through an opening 15 formed on a dashboard 10 and a driver 130 that moves the display panel 110 vertically.

The present disclosure is described based on a form where the display panel 110 is extended from the lower side to the upper side, but the display panel 110 may also be extended horizontally or from the upper side to the lower side.

However, considering the installation space for the driver 130 and the storage space for the display panel 110 at the front of the vehicle, as shown in FIG. 1, the opening 15 may be formed on the dashboard 10, and the storage space for the driver 130 and the display panel 110 may be arranged beneath the dashboard 10.

FIG. 1(a) shows a first state, and FIG. 1(b) shows a second state. In the first state, the upper part of the display panel 110 is partially exposed. The display panel 110 moves upward and transitions to the second state. In the second state, the lower part of the display panel 110 is also exposed upward to allow the display panel 110 to expand to the maximum screen size.

The display panel 110 may display graphic objects corresponding to various types of information. The display panel 110 may include at least one of a liquid crystal display (LCD), a thin film transistor-liquid crystal display (TFT LCD), an organic light-emitting diode (OLED), a flexible display, a three-dimensional (3D) display, or an electronic ink (e-ink) display.

The display panel 110 may form a layered structure or be integrated with a touch input unit 213, thereby implementing a touch screen. The display panel 110 may include a transparent display. The transparent display may be attached to the windshield or window.

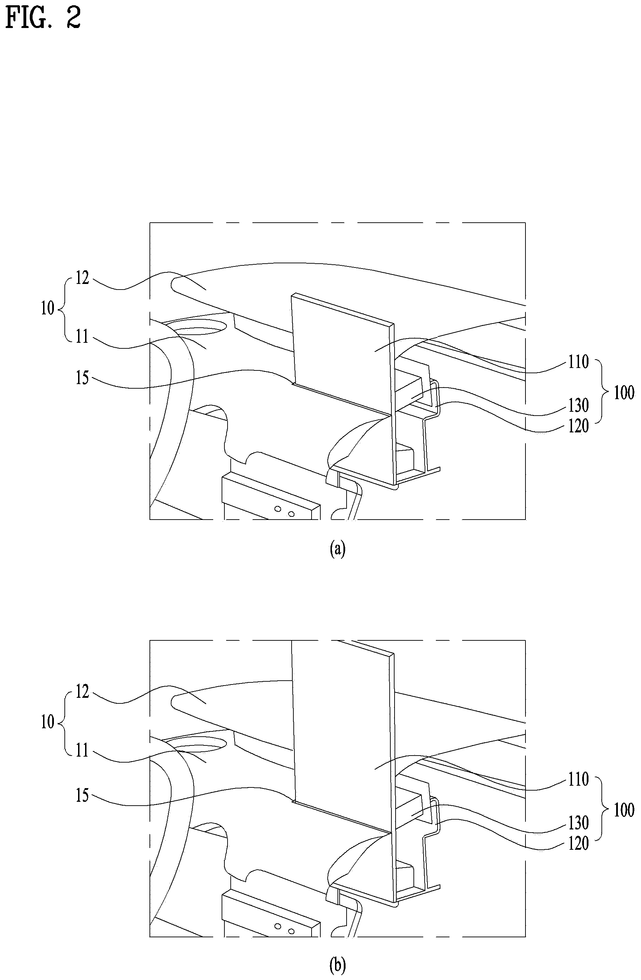

FIG. 2 is a cross-sectional view along lines A-A and B-B of FIG. 1. The driver 130, located on the rear side of the display panel 110, may be positioned inside the dashboard 10.

As shown in FIG. 2, the dashboard 10 may be composed of two layers where the part closer to the driver is lower and the front part is higher. The front and rear parts of the dashboard 10 may have a step difference, and the opening 15 through which the display panel 110 extends or retracts may be located between a first dashboard 11 and a second dashboard 12.

The second dashboard 12, which is located in the rear direction of the display panel 110, has a step difference from the first dashboard 11, thereby allowing a fixed cover 120, which is positioned at the rear side of the display device 100, to be aligned with the location of the second dashboard 12.

The fixed cover 120 covers the driver 130, which moves the display panel 110 in the vertical direction. Components (such as a motor 131 and a pinion gear) that remain stationary in the driver 130 may be fixed.

The driver 130 is mounted inside the dashboard 10 and may partially protrude above the opening 15. However, the driver 130 is mostly covered by the second dashboard 12 or has minimal exposure.

FIG. 2(a) shows the first state (cross-sectional view along line A-A). In the first state, the fixed cover 120 or driver 130 is not located at the rear side of a portion of the display unit protruding above the second dashboard, thereby allowing the display device 100 to maintain a slim appearance.

FIG. 2(b) shows the second state (cross-sectional view along line B-B). When transitioning to the second state, the display panel 110 moves upward. In the second state, the fixed cover 120 may be positioned above the lower end of the display panel 110 to cover the components (such as a rack gear 137) of the driver 130 located at the rear side of the display panel 110.

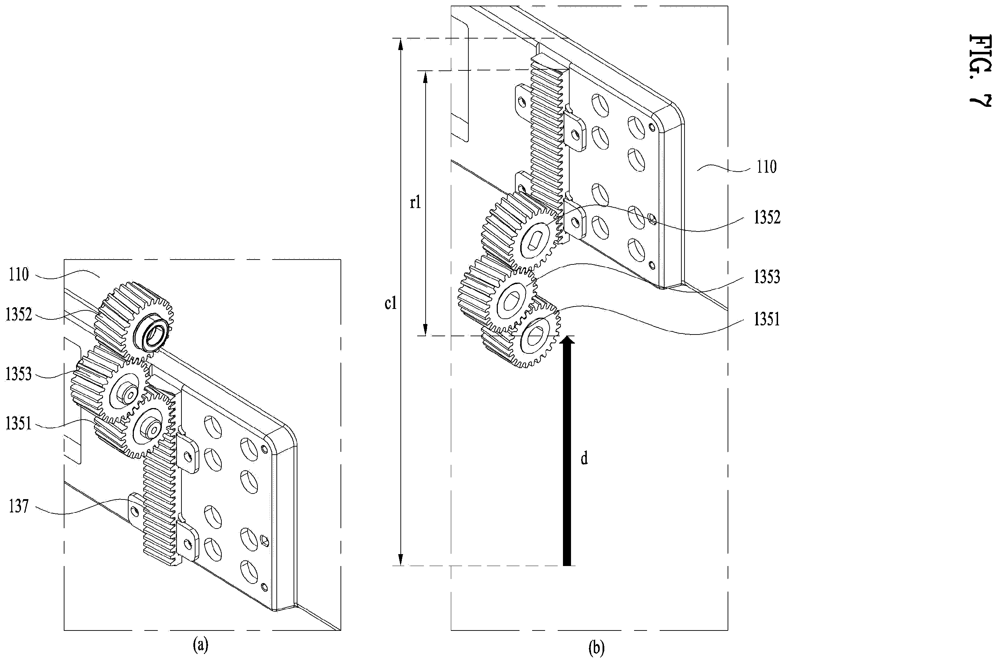

The vertical height of the fixed cover 120 should be greater than or equal to the movement distance of the display panel 110 and the length of the rack gear 137. This will be explained in detail with reference to FIG. 7.

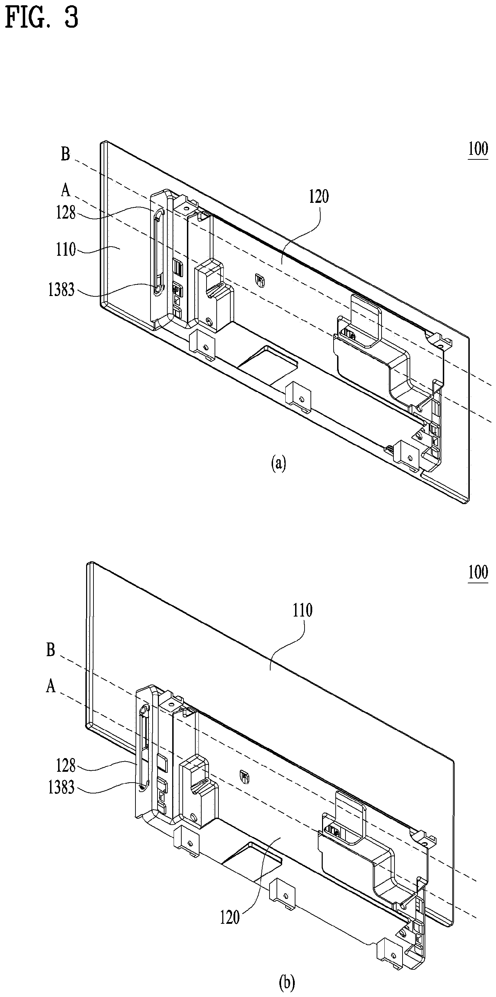

FIG. 3 is a rear perspective view of the display device 100 according to an embodiment of the present disclosure. In FIG. 3, A corresponds to a position aligned with the upper side of the first dashboard 11, and B corresponds to a position aligned with the upper side of the second dashboard 12. The upper part of A is visible to a user seated in the vehicle, while the upper part of B is visible when viewed from the rear side of the display device 100 (from the front of the vehicle).

If the thickness of the display device 100 exposed above the dashboard 10 is too large, the display device 100 becomes bulky and is not preferred from the design perspective. The present disclosure aims to improve the structure of the driver 130 that moves the display panel 110 to reduce the size of the fixed cover 120.

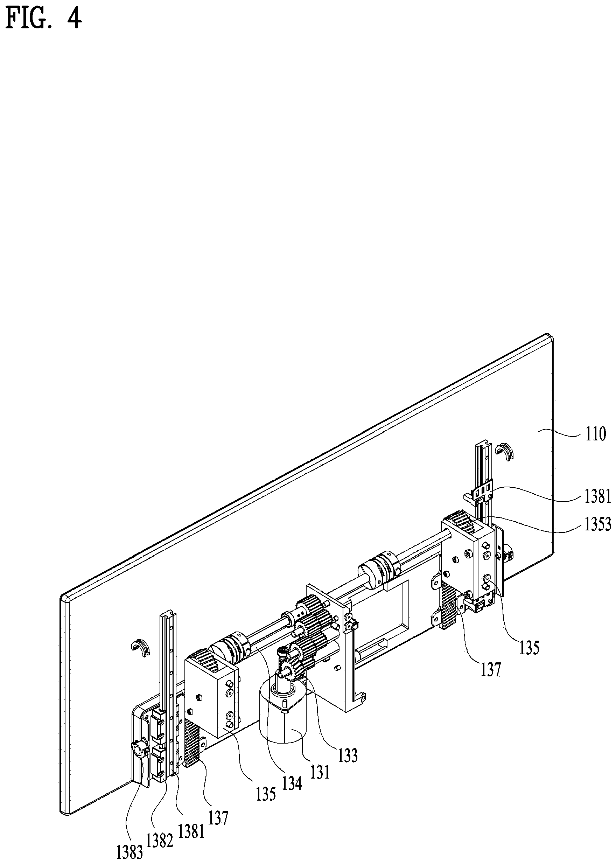

FIG. 4 is a view showing the driver 130 of the display device 100 according to an embodiment of the present disclosure. FIG. 4 shows the driver 130 located at the rear side of the display panel 110 in the state with the fixed cover 120 removed in FIG. 3(a).

The driver 130 may include the motor 131 that provides rotational power, the pinion gear that rotates by receiving the rotational power from the motor 131, and the rack gear 137 that engages with the pinion gear and moves linearly when the pinion gear rotates.

The display panel 110 of the present disclosure is elongated in the horizontal direction. The display panel 110 may be equipped with a pair of rack gears 137 on the left and right sides to ensure smooth movement without twisting. A horizontal shaft 134, which is elongated in the horizontal direction, may be used to transmit the power from the single motor 131 to both sides.

Since the horizontal shaft 134 extends in the horizontal direction, the motor 131 may also be arranged to rotate along a horizontal axis. However, when the motor 131 rotates, the axis may be subjected to loads due to gravity. Therefore, as shown in FIG. 4, the axis of the motor may be positioned vertically, and the rotational force along the vertical axis may be transferred into the rotational force along the horizontal axis.

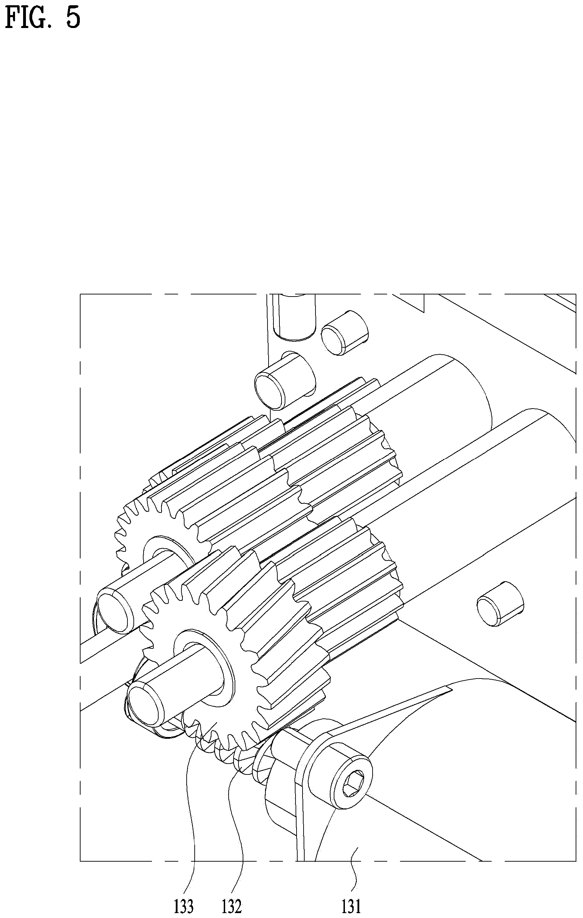

FIG. 5 is an enlarged view of the motor 131. FIG. 5 shows a worm gear 132 attached to the axis of the motor 131 and a helical gear 133 that engages and rotates with the worm gear 132. The worm gear 132 is implemented as a bar with a screw-shaped outer surface. The gear that engages with the worm gear 132 may rotate around an axis in a direction different from the rotational axis of the worm gear 132 (generally along a vertical axis).

Therefore, unlike the worm gear 132 that is vertically oriented, the rotational axis of the helical gear 133 is extended in the horizontal direction.

Although a spur gear may be used for the gear that engages with the worm gear 132, in this embodiment, the helical gear 133 is used. The helical gear 133 has twisted teeth, which provide better engagement than the spur gear, and thus, the helical gear 133 generates less noise and is advantageous for power transmission.

As shown in FIG. 4, multiple gears are provided to adjust the rotational speed of the horizontal shaft 134 relative to the rotational speed of the motor 131.

The horizontal shaft 134 extends in the left and right directions, and a pair of gear modules are located at the ends of the horizontal shaft 134 on both sides. Since the gear module has a symmetrical structure on both sides, the explanation will be based on one gear module.

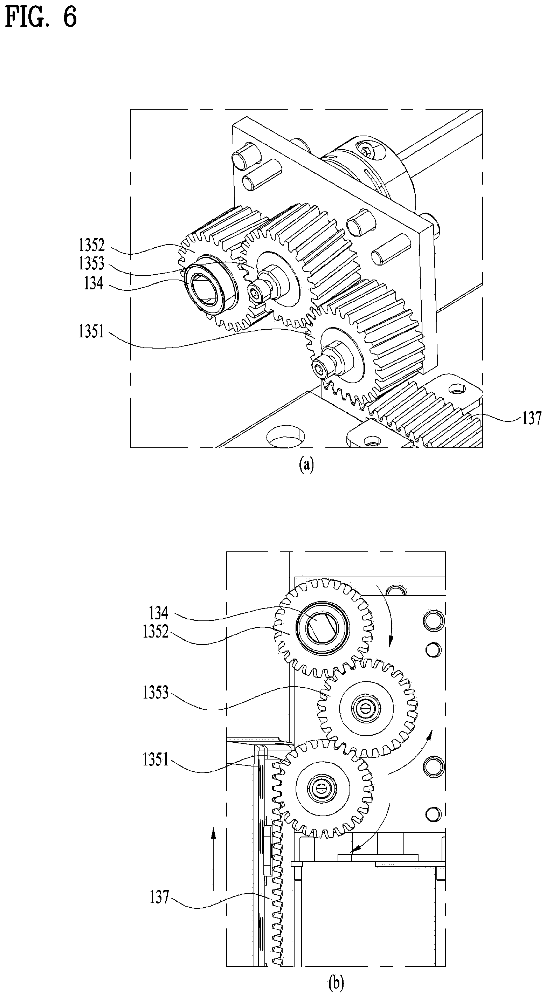

FIG. 6 is a view showing a pinion gear module 135 of the display device 100 according to an embodiment of the present disclosure. As shown in FIG. 6, the pinion gear module 135 includes multiple pinion gears 1351, 1352, and 1353, and the horizontal shaft 134 is connected to one of these pinion gears to transmit rotational power.

In this embodiment, a second pinion gear 1352, which is located at the top, is connected to the horizontal shaft 134, and a first pinion gear 1351 is positioned below the second pinion gear 1352. To transfer the rotational power from the second pinion gear 1352 to the first pinion gear 1351, a third pinion gear 1353, which is located between the first and second pinion gears, may be further included.

The horizontal shaft 134 may also be coupled with the first pinion gear 1351 or the third pinion gear 1353.

The first pinion gear 1351 and the second pinion gear 1352 are positioned in the same horizontal location but are spaced apart vertically. The third pinion gear 1353 may be located between the first pinion gear 1351 and the second pinion gear 1352.

As shown in FIG. 6(b), the rotation direction of the third pinion gear 1353 differs from those of the first pinion gear 1351 and the second pinion gear 1352. If the third pinion gear 1353 comes into contact with the rack gear 137, the vertical movement of the rack gear 137 may be restricted. Thus, compared to the first pinion gear 1351 or the second pinion gear 1352, the third pinion gear 1353 may be positioned slightly toward the rear side to avoid contact with the rack gear 137.

FIG. 7 is a view showing the positions of the pinion gear and the rack gear 137 in the first and second states of the display device 100 according to an embodiment of the present disclosure. FIG. 7(a) shows the first state. In the first state, the rack gear 137 engages with the first pinion gear 1351. FIG. 7(b) shows the second state. In FIG. 7(b), the rack gear 137 engages with the second pinion gear 1352.

When transitioning from the first state to the second state, the rack gear 137 initially engages with both the first pinion gear 1351 and the second pinion gear 1352 while engaging with the first pinion gear 1351. Finally, the rack gear 137 engages only with the second pinion gear 1352, and the transition to the second state is completed.

The rack gear 137 is capable of being driven by engaging with either the first pinion gear 1351 or the second pinion gear 1352. Thus, in the first state, the upper part of the rack gear 137 engages with the first pinion gear 1351, and in the second state, the lower part of the rack gear 137 engages with the second pinion gear 1352. Therefore, the length r1 of the rack gear 137 may be shorter than the movement distance d.

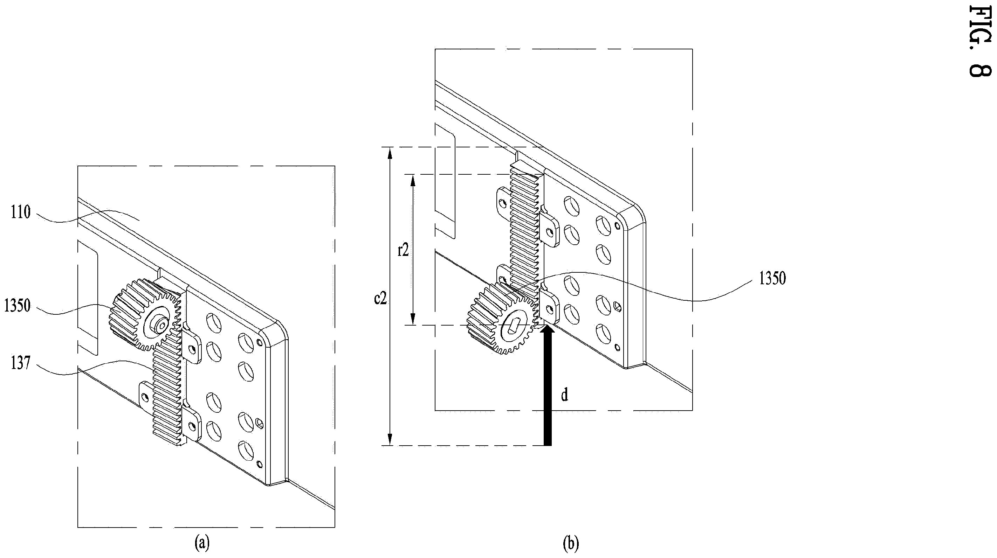

FIG. 8 is a view showing the driver 130 when there is only a single pinion gear. In this case, the rack gear 137 needs to remain engaged with the single pinion gear in both the first and second states. Therefore, the length r2 of the rack gear 137 should be longer than the movement distance d. In other words, in addition to the movement distance, the rack gear 137 requires an extra length corresponding to a space for the rack gear 137 to engage with the pinion gear.

If the length of the rack gear 137 increases, the space occupied by the rack gear 137 at the rear side of the display panel 110 also increases. Since the fixed cover 120 needs to have a sufficient height to cover the rack gear 137 even in the second state, the height c1 of the fixed cover 120 when multiple pinion gears are used as shown in FIG. 7 may be shorter than the height c2 of the fixed cover 120 in the embodiment shown in FIG. 8.

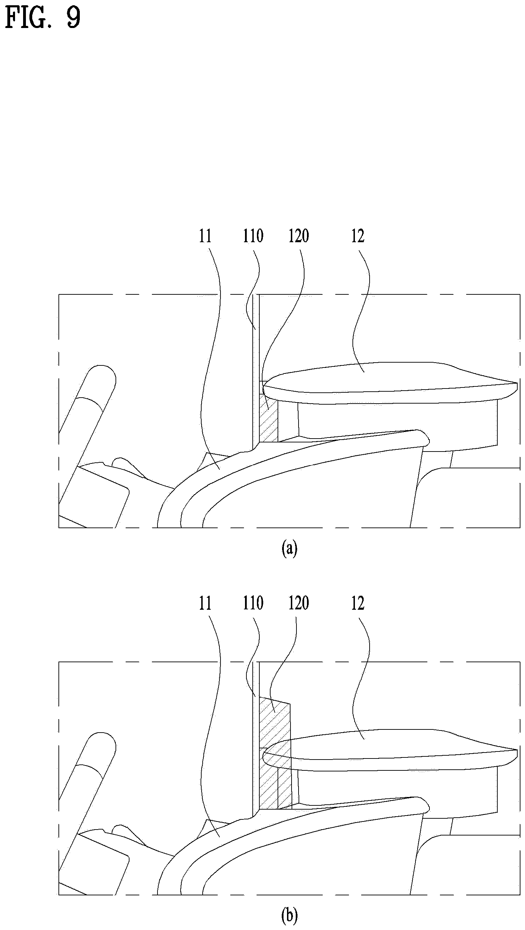

FIG. 9 is a side view showing the position of the fixed cover 120 based on the number of pinion gears. FIG. 9(a) shows an embodiment with multiple pinion gears as shown in FIG. 7, while FIG. 9(b) shows an embodiment with a single pinion gear as shown in FIG. 8.

If the length of the rack gear 137 is short, as shown in FIG. 9(a), the height of the fixed cover 120 is also reduced, and thus, the fixed cover 120 does not protrude above the second dashboard 12. On the other hand, if the length of the rack gear 137 is long, as shown in FIG. 9(b), the rack gear 137 protrudes above the second dashboard 12, and the height of the fixed cover 120 need to be increased accordingly. This results in a bulky appearance when viewed from the side due to the fixed cover 120.

The aforementioned embodiment has been described based on an example where two pinion gears engage with the rack gear 137. However, if two or more pinion gears are used and the length of the rack gear 137 decreases, it is possible to achieve a longer driving distance.

Referring to FIG. 4, a guide rail 1381 and a guide block 1382 may be further included to assist the vertical movement.

The guide rail 1381 is coupled to the fixed cover 120, while the guide block 1382 is coupled to the rear side of the display panel 110. The guide block 1382 may move vertically along the guide rail 1381.

Twisting may occur due to the rack gear 137 and pinion gear. As shown in FIG. 4, the guide rail 1381 and guide block 1382 may support the vertical movement without shaking.

Additionally, as shown in FIG. 3, a long slot may be formed in the fixed cover 120, and a guide protrusion 1383 to be inserted into the slot may be formed on the rear side of the display panel 110, thereby assisting the vertical movement.

As described above, the display device 100 of the present disclosure may reduce the height of the driver 130 at the rear side thereof, thereby minimizing the size of the fixed cover 120.

In particular, the instrument panel applied to vehicles may adjust the size, thereby facilitating an unobstructed front view and providing a sense of openness.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

## Claims

1. A display device comprising:
a display panel configured to display images on a front side; and
a driver coupled to a rear side of the display panel and configured to move the display panel in a vertical direction,
wherein the driver comprises:
a motor configured to provide rotational power;
a pinion gear module configured to rotate by receiving the rotational power from the motor and comprising a first pinion gear and a second pinion gear arranged parallel in the vertical direction; and
a rack gear located at the rear side of the display panel, extending in the vertical direction, and maintaining engagement with at least one of the first pinion gear or the second pinion gear.

2. The display device of claim 1, wherein the display panel moves upward to transition from a first state to a second state,
wherein in the first state, the rack gear engages with the first pinion gear, and
wherein in the second state, the rack gear engages with the second pinion gear.

3. The display device of claim 2, wherein a length of the rack gear is shorter than a distance the display panel moves to transition from the first state to the second state.

4. The display device of claim 1, wherein the pinion gear module further comprises a third pinion gear located between the first pinion gear and the second pinion gear and configured to synchronize the first pinion gear and the second pinion gear to rotate in a same direction.

5. The display device of claim 4, wherein the third pinion gear is positioned more toward a rear side than the first pinion gear and the second pinion gear.

6. The display device of claim 2, comprising a fixed cover coupled to the rear side of the display panel and configured to cover the driver,
wherein in the second state, an upper end of the fixed cover is located above an upper end of the rack gear.

7. The display device of claim 6, comprising:
a guide rail fixed to the fixed cover and extending in the vertical direction; and
a guide block coupled to the rear side of the display panel and configured to move along the guide rail.

8. The display device of claim 1, wherein the driver comprises:
a worm gear coupled to the motor;
a helical gear configured to engage with and rotate along with the worm gear, wherein the helical gear is configured to rotate around an axis extending perpendicular to a rotational axis of the motor; and
a horizontal shaft configured to engage with and rotate along with the helical gear and extending in a horizontal direction,
wherein the pinion gear module is configured receive the rotational power from the motor via the horizontal shaft.

9. The display device of claim 8, wherein the rack gear and the pinion gear module are provided on each side of the display panel, and
wherein the horizontal shaft extends to each side of the display panel and is connected with the pinion gear module at each end.

10. The display device of claim 8, wherein the first pinion gear is configured to rotate around the horizontal shaft, and
wherein the display device further comprises a third pinion gear located between the first pinion gear and the second pinion gear and configured to synchronize the first pinion gear and the second pinion gear to rotate in a same direction.

11. A vehicle comprising:
a dashboard located at a front interior of the vehicle and having a horizontally elongated opening;
a display panel configured to retract and extend through the opening; and
a driver coupled to a rear side of the display panel and configured to move the display panel upward and downward,
wherein the driver comprises:
a motor configured to provide rotational power;
a pinion gear module configured to rotate by receiving the rotational power from the motor and comprising a first pinion gear and a second pinion gear arranged parallel in a vertical direction; and
a rack gear located at the rear side of the display panel, extending in the vertical direction, and maintaining engagement with at least one of the first pinion gear or the second pinion gear.

12. The vehicle of claim 11, wherein the display panel moves upward to transition from a first state to a second state,
wherein in the first state, an upper part of the display panel is exposed outside the opening, and
wherein in the second state, an area of the display panel exposed outside the opening reaches a maximum.

13. The display device of claim 12,
wherein the pinion gear module further comprises a third pinion gear located between the first pinion gear and the second pinion gear and configured to synchronize the first pinion gear and the second pinion gear to rotate in a same direction.
wherein in the first state, the rack gear engages with the first pinion gear, and
wherein in the second state, the rack gear engages with the second pinion gear.

14. The vehicle of claim 12, wherein a length of the rack gear is shorter than a distance the display panel moves to transition from the first state to the second state.

15. The vehicle of claim 12, comprising a fixed cover coupled to the rear side of the display panel and configured to cover the driver,
wherein in the second state, an upper end of the fixed cover is located above an upper end of the rack gear.
